# EUROPÄISCHE PATENTANMELDUNG

(11) **EP 4 813 194 A1**
(43) Veröffentlichungstag der Anmeldung: **30.09.2026**
(21) Anmeldenummer: 26155879.5
(22) Anmeldetag: 03.02.2026
(51) Int. Cl.: A01F 15/07, A01F 15/08

(54) **WICKELEINRICHTUNG ZUM EINWICKELN VON ZYLINDRISCHEN ERNTEGUTBALLEN MIT EINEM WICKELMATERIAL**

(30) Priorität: 25.03.2025 DE 102025111375
(71) Anmelder: Usines CLAAS France S.A.S, 57140 St. Rémy / Woippy (FR)
(72) Erfinder: Batancourt, Grégory, 57130 Vionville (FR); Mansuy, Charles, 88600 Aydoilles (FR); Muller, Emmanuel, 55140 Vaucouleurs (FR)
(74) Vertreter: CLAAS Gruppe

(57) **Zusammenfassung**

Die vorliegende Erfindung betrifft eine Wickeleinrichtung (3) zum Einwickeln von zylindrischen Erntegutballen (E) mit einem Wickelmaterial. Die Wickeleinrichtung (3) umfasst eine Ballenablagevorrichtung (14), welche an einem Wickeltisch (11) der Wickeleinrichtung (3) um eine horizontal verlaufende Rotationsachse (RH3) zwischen einer Arbeitsstellung (A) und einer Transportstellung (T) reversibel verschwenkbar angeordnet ist. Die Wickeleinrichtung (3) ist dadurch gekennzeichnet, dass die Ballenablagevorrichtung (14) eine zum Verschwenken der Ballenablagevorrichtung (14) zwischen der Arbeitsstellung (A) und der Transportstellung (T) ansteuerbare Aktuierungseinrichtung (18) umfasst, wobei die Ballenablagevorrichtung (14) ein Betätigungselement (19) umfasst, welches mit der Aktuierungseinrichtung (18) gekoppelt ist und dazu vorgesehen und eingerichtet ist, während eines Schwenkvorgangs der Ballenablagevorrichtung (14) aus der Arbeitsstellung (A) in die Transportstellung (T) und umgekehrt zeitweise mit dem Wickeltisch (11) zusammenzuwirken.

## Beschreibung

Die vorliegende Anmeldung betrifft eine Wickeleinrichtung zum Einwickeln von zylindrischen Erntegutballen mit einem Wickelmaterial gemäß dem Oberbegriff des unabhängigen Patentanspruchs 1 sowie eine landwirtschaftliche Press-Wickelkombination gemäß dem Oberbegriff des unabhängigen Patentanspruchs 11.

In der Landwirtschaft ist es üblich, Gras und/oder Klee durch sogenanntes Silieren für die Fütterung von Tieren haltbar zu machen. Für die Konservierung des Grünfutters ist es erforderlich, dieses zunächst zu verdichten und für die anschließende Milchsäuregärung unter Luftabschluss zu bringen. Ein besonders futterschonendes Verfahren hierzu besteht in der Verdichtung des Erntegutes durch eine Ballenpresse, die nach verschiedenen Verfahren das Erntegut aufsammeln und zu Erntegutballen verschiedener Abmessungen formen kann. Zum Schutz des Erntegutes vor Witterungseinflüssen und um den Fermentierungsprozess zu ermöglichen, ist ein im Wesentlichen luft- und flüssigkeitsdichter Einschluss des Erntegutes erforderlich, welcher durch das Einwickeln bzw. Umhüllen des Erntegutballens mit einem bahnförmigen Wickelmaterial erreicht wird. Hierzu kommen sogenannte Wickeleinrichtungen zum Einsatz.

Wickeleinrichtungen eingangs genannter Art sind aus der Landwirtschaft bekannt und können Teil einer landwirtschaftlichen Press-Wickelkombination sein, die in der einfachsten Ausführung aus einer Ballenpresse, in der Regel einer landwirtschaftlichen Rundballenpresse, und einer dieser nachgeordneten und mit dieser gekoppelten Wickeleinrichtung besteht. Die Press-Wickelkombination wird an einen landwirtschaftlichen Traktor angehängt und ist zum Aufnehmen von schwadförmig abgelegtem und eventuell angewelktem Erntegut vorgesehen. Die Rundballenpresse umfasst hierfür sogenannte Mittel zum Aufnehmen und Fördern von Erntegut, die das Erntegut im Betrieb der Rundballenpresse vom Boden einer landwirtschaftlichen Fläche aufnehmen und in eine Presskammer der Rundballenpresse fördern, in der das Erntegut zu einem zylindrischen Erntegutballen geformt wird. Ein Pressengehäuse einer solchen Rundballenpresse umfasst in der Regel ein feststehendes Pressengehäuseteil und eine relativ zu dem feststehenden Pressengehäuseteil schwenkbare Auswurfklappe. Die Presskammer der Rundballenpresse ist in dem Pressengehäuse ausgebildet, wobei die Rundballenpresse ein Pressmittel umfasst, welches die Presskammer umfangsseitig begrenzt. Das Pressmittel kann als Pressriemen ausgebildet sein oder aus einer Vielzahl von voneinander beabstandeten Pressrollen gebildet werden. Mittels des Pressmittels wird das über die Mittel zum Aufnehmen und Fördern in die Presskammer gefördertes Erntegut zum zylindrischen Erntegutballen geformt. Nach Erreichen einer vorbestimmten Größe des zylindrischen Erntegutballens wird zum Auswerfen des zylindrischen Erntegutballens die Auswurfklappe von einer Schließstellung in eine Öffnungsstellung verschwenkt und der zylindrische Erntegutballen an eine der Rundballenpresse nachgeordnete Wickeleinrichtung übergeben. Der zylindrische Erntegutballen wird nach dem Einwickeln bzw. Umhüllen durch die Wickeleinrichtung auf der landwirtschaftlichen Fläche abgelegt.

Die EP 2 033 894 A1 und die EP 2 149 293 A1 beschreiben beispielsweise jeweils eine solche Wickeleinrichtung für eine landwirtschaftliche Press-Wickelkombination zum Pressen und Einwickeln von zylindrischen Erntegutballen. Nach dem Pressen wird der zylindrische Erntegutballen auf einem Wickeltisch der Wickeleinrichtung derart platziert, dass der zylindrische Erntegutballen im Wesentlichen in der senkrechten Rotationsachse der zweiarmigen Wickeleinrichtung angeordnet ist. An den beiden Wickelarmen ist jeweils eine Rolle mit einem bahnförmigen Wickelmaterial angeordnet, welches durch eine Rotation der Wickelarme in einer Ebene um den zylindrischen Erntegutballen herumgeführt wird. Um ein vollständiges Einwickeln bzw. Umhüllen des zylindrischen Erntegutballens zu erreichen, wird der zylindrische Erntegutballen um seine horizontal verlaufende Rotationsachse rotierend von dem Wickeltisch angetrieben.

In der Regel erfolgt die Ablage des vollständig eingewickelten bzw. umhüllten zylindrischen Erntegutballens auf der Umfangsfläche des zylindrischen Erntegutballens, und zwar durch ein Verschwenken des Wickeltisches um eine horizontale Rotationsachse. In einigen Anwendungsfällen ist die Ablage der zylindrischen Erntegutballen auf der Umfangsfläche allerdings als nachteilig bzw. risikobehaftet anzusehen. Insbesondere dann, wenn die landwirtschaftliche Fläche, auf welcher die Press-Wickelkombination arbeitet, durch ein variierendes, also Neigungen aufweisendes, Höhenprofil charakterisiert ist, besteht bei einer Ablage der zylindrischen Erntegutballen auf der Umfangsfläche die Gefahr, dass sich der zylindrische Erntegutballen schwerkraftbedingt nach der Ablage auf der landwirtschaftlichen Fläche ungewollt in Bewegung versetzt. Zylindrische Erntegutballen weisen aufgrund ihrer Maße und hohen Pressdichten eine erhebliche Masse auf, sodass ein sich bewegender zylindrischer Erntegutballen für sich auf der landwirtschaftlichen Fläche oder in unmittelbarer Umgebung um die landwirtschaftliche Fläche aufhaltende Lebewesen lebensgefährlich werden kann. Bei der Arbeit auf solchen landwirtschaftlichen Flächen werden die vollständig eingewickelten bzw. umhüllten zylindrischen Erntegutballen daher in aller Regel auf einer ihrer Stirnseiten abgelegt, was ein Wegrollen vermeidet.

Üblicherweise erlaubt der Wickeltisch selbst eine Ablage des zylindrischen Erntegutballens durch ein Verschwenken des Wickeltisches um die horizontale Rotationsachse nur eine Ablage auf der Umfangsfläche des zylindrischen Erntegutballens. Um dennoch eine Ablage auf einer der Stirnseiten des zylindrischen Erntegutballens möglich zu machen, werden sogenannte Ballenablagevorrichtungen, herkömmlich auch als Ballenaufsteller bezeichnet, verwendet, welche mit der Wickeleinrichtung gekoppelt sind.

Aus der EP 0 543 145 A2 ist in diesem Zusammenhang beispielsweise eine Rundballenpresse mit einer der Presskammer nachgeordneten Wickeleinrichtung bekannt. Hierbei wird der fertig gepresste zylindrische Erntegutballen, auch Rundballen genannt, auf einem Wickeltisch gelagert, um den Rundballen mit einem Wickelmaterial zu Umhüllen. Der Wickeltisch ist derart ausgebildet, dass ein darauf abgelegter Rundballen während des Wickelvorganges um seine Rotationsachse drehbar ist. Der fertig umwickelte Rundballen kann anschließend durch eine Schwenkbewegung des Wickeltisches um eine quer zur Fahrtrichtung angeordnete Schwenkachse, eine horizontale Rotationsachse, aus der Wickeleinrichtung ausgeworfen werden. Um hierbei ein Wegrollen des Rundballens, beispielsweise an einem Hang, zu vermeiden, weist die Rundballenpresse eine der Wickeleinrichtung nachgeordnete als Abladekippvorrichtung bezeichnete Ballenablagevorrichtung bzw. Ballenaufsteller auf. Dabei trifft der aus der Wickeleinrichtung ausgeworfene Rundballen mit seiner Umfangsfläche auf die Abladekippvorrichtung und wird in eine seitliche Kippbewegung gebracht, so dass der Rundballen mit seiner Stirnseite auf dem Boden abgelegt werden kann.

Derartigen Ballenablagevorrichtungen müssen für den Betrieb der Press-Wickelkombination auf einer landwirtschaftlichen Fläche und eine Transportfahrt auf öffentlichen Straßen und Wegen zwischen einer Arbeitsstellung und einer Transportstellung verschwenkt werden. Das Verschwenken der Ballenablagevorrichtung erfordert in aller Regel einen manuellen Eingriff des Bedieners der Press-Wickelkombination. So muss der Bediener aus dem Traktor aussteigen, um die Ballenablagevorrichtung aus der Arbeitsstellung in die Transportstellung und umgekehrt zu verschwenken. Dieser Vorgang ist zeitaufwendig und erfordert eine körperliche Anstrengung, die oftmals eines erheblichen Kraftaufwands bedarf. Dies führt dazu, dass einige Bediener die Ballenablagevorrichtung nicht nach jedem Einsatz wieder in die Transportstellung verbringen, sondern mit der Ballenablagevorrichtung in Arbeitsstellung Transportfahrten, insbesondere solche zwischen zu bearbeitenden landwirtschaftlichen Flächen, durchführen. Dies kann zu einem vorzeitigen Versagen der Ballenablagevorrichtung führen.

Ausgehend von dem vorstehend genannten Stand der Technik ist es demnach die Aufgabe der vorliegenden Erfindung eine Wickeleinrichtung zum Einwickeln von zylindrischen Erntegutballen mit einem Wickelmaterial und einer Ballenablagevorrichtung anzugeben, welche ein einfacheres Verschwenken der Ballenablagevorrichtung aus der Arbeitsstellung in die Transportstellung und umgekehrt erlaubt, ohne dass der Bediener den Traktor hierfür verlassen und das Verschwenken manuell durchführen muss.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 10 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung eine Wickeleinrichtung zum Einwickeln von zylindrischen Erntegutballen mit einem Wickelmaterial, insbesondere für eine landwirtschaftliche Press-Wickelkombination. Die Wickeleinrichtung umfasst einen Tragrahmen, der mit einem Wickeltisch zur Aufnahme und zur Abgabe des zylindrischen Erntegutballens gekoppelt ist. Die Wickeleinrichtung umfasst eine Ballenablagevorrichtung, welche an dem Wickeltisch um eine horizontal verlaufende Rotationsachse zwischen einer Arbeitsstellung, in welcher sich die Ballenablagevorrichtung auf einem Untergrund abstützt, und einer Transportstellung, in welcher die Ballenablagevorrichtung keinen Kontakt zum Untergrund hat, reversibel verschwenkbar angeordnet ist. Die Wickeleinrichtung ist dadurch gekennzeichnet, dass die Ballenablagevorrichtung eine zum Verschwenken der Ballenablagevorrichtung zwischen der Arbeitsstellung und der Transportstellung ansteuerbare Aktuierungseinrichtung umfasst, wobei die Ballenablagevorrichtung ein Betätigungselement umfasst, welches mit der Aktuierungseinrichtung gekoppelt ist und dazu vorgesehen und eingerichtet ist, während eines Schwenkvorgangs der Ballenablagevorrichtung aus der Arbeitsstellung in die Transportstellung und umgekehrt zeitweise mit dem Wickeltisch zusammenzuwirken.

Die erfindungsgemäße Wickeleinrichtung begünstigt die Handhabung und Sicherheit bei der Ablage von zylindrischen Erntegutballen in erheblichem Maße. Bedingt durch die Integration einer ansteuerbaren Aktuierungseinrichtung zum Verschwenken der Ballenablagevorrichtung zwischen ihrer Arbeitsstellung und Transportstellung in Verbindung mit einem Betätigungselement, welches mit dem Wickeltisch der Wickeleinrichtung zusammenwirkt, wird der Bedienkomfort deutlich verbessert. Entgegen der sonst üblichen Art muss ein Bediener durch die erfindungsgemäße Lösung nicht mehr den Traktor verlassen und das Verschwenken der Ballenablagevorrichtung manuell durchführen. Vielmehr kann das Verschwenken durch die Ansteuerung der Aktuierungseinrichtung automatisiert veranlasst werden, was die Effizienz des Arbeitsprozesses erhöht und körperliche Anstrengung sowie Zeitaufwand reduziert. Darüber hinaus minimiert die Automatisierung dieses Vorgangs das Risiko von Bedienfehlern und trägt zur Langlebigkeit der Ballenablagevorrichtung bei, da die korrekte Positionierung der Ballenablagevorrichtung während einer Transportfahrt auf einfache Art und Weise sichergestellt werden kann. Die Kombination aus Aktuierungseinrichtung und Betätigungselement, welches während des Schwenkvorgangs der Ballenablagevorrichtung mit dem Wickeltisch zusammenwirkt, sorgt insgesamt für eine unkomplizierte, schnelle und präzise Verlagerung der Ballenablagevorrichtung zwischen ihrer Arbeitsstellung und ihrer Transportstellung.

Gemäß einer vorteilhaften Weiterbildung der Erfindung ist vorgesehen, dass die Ballenablagevorrichtung in Form eines Gestells mit einem daran angeordneten Abweiser zum Ablegen des zylindrischen Erntegutballens auf einer Stirnseite ausgebildet ist, wobei die Aktuierungseinrichtung einenends schwenkbeweglich mit dem Gestell der Ballenablagevorrichtung und anderenends schwenkbeweglich mit dem Betätigungselement verbunden ist, wobei das Betätigungselement als Koppelglied ausgebildet ist und mit dem Gestell der Ballenablagevorrichtung schwenkbeweglich verbunden ist.

Die Ausgestaltung des Betätigungselements als Koppelglied und die Anbindung der Aktuierungseinrichtung und des Betätigungselements an die tragende Struktur der Ballenablagevorrichtung, also das Gestell, verbessert das automatisierte Verschwenken der Ballenablagevorrichtung zwischen der Arbeitsstellung und der Transportstellung weiter. Aufgrund der schwenkbeweglichen Anbindung der Aktuierungseinrichtung und des als Koppelglied ausgebildeten Betätigungselements mit dem Gestell der Ballenablagevorrichtung wird eine präzise und koordinierte Steuerung der Bewegungsabläufe beim Verschwenken der Ballenablagevorrichtung erzielt, wobei die wirkenden Antriebskräfte effizient und gleichmäßig zwischen den verschiedenen miteinander gekoppelten Strukturen übertragen werden.

Gemäß einer vorteilhaften Weiterbildung der Erfindung ist vorgesehen, dass die Aktuierungseinrichtung als Verstellzylinder, vorzugsweise hydraulischer Verstellzylinder, ausgebildet ist, wobei der Verstellzylinder ein Zylindergehäuse und eine aus dem Zylindergehäuse ausfahrbare bzw. in das Zylindergehäuse einfahrbare Zylinderstange umfasst, wobei das Zylindergehäuse mit dem Gestell der Ballenablagevorrichtung schwenkbeweglich verbunden ist und die Zylinderstange mit dem als Koppelglied ausgebildeten Betätigungselement schwenkbeglich verbunden ist.

Die Ausgestaltung der Aktuierungseinrichtung als Verstellzylinder, insbesondere als hydraulischer Verstellzylinder, begünstigt eine kraftvolle und präzise Steuerung der Bewegungen, wodurch trotz der durch Schwerkraft wirkenden Last der Ballenablagevorrichtung ein zuverlässiges Verschwenken und Festlegen der Ballenablagevorrichtung in der Arbeitsstellung und der Transportstellung sichergestellt wird. Bei der Ausgestaltung des Verstellzylinders als hydraulischer Verstellzylinder wird ferner eine sehr feinfühlige und stufenlose Anpassung der Bewegungsgeschwindigkeit begünstigt. Darüber hinaus zeichnet sich ein hydraulischer Verstellzylinder durch seine Robustheit und Langlebigkeit aus, was die Wartungsanforderungen reduziert und die Zuverlässigkeit des Systems insgesamt erhöht. Hierdurch kann sichergestellt werden, dass die Wickeleinrichtung besonders geeignet ist für den Einsatz unter anspruchsvollen landwirtschaftlichen Bedingungen.

Vorzugsweise ist vorgesehen, dass die Zylinderstange des Verstellzylinders in der Transportstellung der Ballenablagevorrichtung vollständig aus dem Zylindergehäuse ausgefahren und in der Arbeitsstellung der Ballenablagevorrichtung vollständig im Zylindergehäuse eingefahren ist.

Durch das vollständige Ausfahren und Einfahren der Zylinderstange in beiden Endpositionen, also in der Transportstellung und in der Arbeitsstellung der Ballenablagevorrichtung, wird durch die Vorgabe von fixen mechanischen Anschlägen eine hohe Stabilität der Ballenablagevorrichtung in der Arbeitsstellung und der Transportstellung gewährleistet, da der Verstellzylinder in diesen Positionen keinen weiteren Bewegungsspielraum hat.

Gemäß einer vorteilhaften Weiterbildung der Erfindung ist vorgesehen, dass der Wickeltisch eine Anlagestruktur, vorzugsweise in Gestalt eines Anlagebolzens, umfasst, wobei das Betätigungselement während des Verschwenkens der Ballenablagevorrichtung aus der Arbeitsstellung in die Transportstellung und umgekehrt zeitweise an der Anlagestruktur des Wickeltisches anliegt.

Gemäß einer vorteilhaften Weiterbildung der Erfindung ist vorgesehen, dass das Betätigungselement als ein Hebel mit einer sichelförmigen Formgebung ausgebildet ist, wobei an einer konvexen Umfangsfläche des Hebels eine Anlagestruktur, vorzugsweise in Gestalt einer Anlageplatte, ausgebildet ist, wobei der Hebel während des Schwenkvorgangs der Ballenablagevorrichtung aus der Arbeitsstellung in die Transportstellung und umgekehrt zeitweise mit seiner Anlagestruktur an der Anlagestruktur des Wickeltisches anliegt.

Die erfindungsgemäße Ausgestaltung des Wirkflächenpaares von Wickeltisch einerseits und Betätigungselements anderseits begünstigt das Verschwenken der Ballenablagevorrichtung weiter. Die Anlagestrukturen stellen einen definierten Kontaktbereich beider Vorrichtungen miteinander dar, was den Verschleiß minimiert und die Langlebigkeit des Systems erhöht. Die sichelförmige Ausgestaltung des Hebels verbessert die Kraftübertragung und erlaubt die Anordnung der Strukturen und die Umsetzung des Bewegungsmusters zum Verschwenken der Ballenablagevorrichtung bei geringem Bauraufbedarf.

Gemäß einer vorteilhaften Weiterbildung der Erfindung ist vorgesehen, dass die Ballenablagevorrichtung eine Sensoreinrichtung, vorzugsweise einen Drehwinkelsensor, umfasst, welche dazu vorgesehen und eingerichtet ist, eine Lage der Ballenablagevorrichtung zu erfassen, anhand welcher bestimmbar ist, dass die Ballenablagevorrichtung in der Transportstellung oder der Arbeitsstellung positioniert ist.

Die Nutzung einer Sensoreinrichtung, insbesondere eines Drehwinkelsensors, ermöglicht eine präzise Erfassung der Lage der Ballenablagevorrichtung, wodurch zuverlässig zwischen Transportstellung und Arbeitsstellung unterschieden werden kann. Dies ist für den automatisierten Schwenkvorgang von erheblichem Vorteil und vermeidet eine manuelle Überwachung der Stellungen der Ballenablagevorrichtung. Weiterhin kann durch die Überwachung der Lage das Risiko von Fehlfunktionen und/oder Beschädigung aufgrund von einer für den jeweiligen Betrieb ungeeigneten Stellungen der Ballenablagevorrichtung reduziert werden.

Gemäß einer vorteilhaften Weiterbildung der Erfindung ist vorgesehen, dass der Wickeltisch um eine horizontal verlaufende Rotationsachse schwenkbeweglich zumindest zwischen einer Erntegutballenaufnahmestellung und einer Wickelstellung ansteuerbar reversibel verstellbar am Tragrahmen der Wickeleinrichtung angeordnet ist, wobei die Wickeleinrichtung dazu vorgesehen und eingerichtet ist, das Verschwenken der Ballenablagevorrichtung aus der Arbeitsstellung in die Transportstellung und umgekehrt durch ein Verstellen des Wickeltisches zwischen der Wickelstellung und der Erntegutballenaufnahmestellung und umgekehrt zu unterstützen.

Gemäß einer vorteilhaften Weiterbildung der Erfindung ist vorgesehen, dass der Wickeltisch in der Arbeitsstellung der Ballenablagevorrichtung in der Wickelstellung und in der Transportstellung der Ballenablagevorrichtung in der Erntegutballenaufnahmestellung positioniert ist.

Gemäß einer vorteilhaften Weiterbildung der Erfindung ist vorgesehen, dass die Ballenablagevorrichtung an dem Wickeltisch um die horizontal verlaufende Rotationsachse aus der Arbeitsstellung in eine Erntegutballenablagestellung reversibel verschwenkbar angeordnet ist, wobei der Wickeltisch um die horizontale Rotationsachse schwenkbeweglich aus der Wickelstellung in eine Erntegutballenabgabestellung ansteuerbar reversibel verstellbar am Tragrahmen der Wickeleinrichtung angeordnet ist, wobei die Wickeleinrichtung dazu vorgesehen und eingerichtet ist, die Ballenablagevorrichtung aus der Arbeitsstellung in die Erntegutballenablagestellung und umgekehrt durch ein Verstellen des Wickeltisches zwischen der Wickelstellung und der Erntegutballenabgabestellung und umgekehrt zu verbringen, wobei der Wickeltisch in der Erntegutballenablagestellung der Ballenablagevorrichtung in der Erntegutballenabgabestellung positioniert ist.

Die erfindungsgemäße Aufgabe wird ferner durch eine landwirtschaftliche Press-Wickelkombination gelöst, welche eine landwirtschaftliche Rundballenpresse und eine solche Wickeleinrichtung zum Einwickeln von zylindrischen Erntegutballen mit Wickelmaterial umfasst.

Die vorliegende Erfindung wird nachstehend anhand der in den Figuren abgebildeten Ausführungsformen näher beschrieben.

### Es zeigen:

- FIG. 1:: eine schematische und exemplarische Ansicht einer erfindungsgemäßen Press-Wickelkombination umfassend eine landwirtschaftliche Rundballenpresse und eine erfindungsgemäße Wickeleinrichtung zum Einwickeln von zylindrischen Erntegutballen mit einem Wickelmaterial;
- FIG. 2A:: eine schematische und exemplarische Ansicht der erfindungsgemäßen Wickeleinrichtung aus FIG. 1 mit einer Ballenablagevorrichtung in einer Transportstellung;
- FIG. 2B:: eine schematische und exemplarische Ansicht der erfindungsgemäßen Wickeleinrichtung aus FIG. 1 mit der Ballenablagevorrichtung in einer Arbeitsstellung;
- FIG. 2C:: eine schematische und exemplarische Ansicht der erfindungsgemäßen Wickeleinrichtung aus FIG. 1 mit der Ballenablagevorrichtung in einer Ballenablagestellung; und
- FIG. 3:: eine schematische und exemplarische Teilansicht der erfindungsgemäßen Wickeleinrichtung, wobei ein erfindungsgemäßer Mechanismus zum Verschwenken der Ballenablagevorrichtung zwischen der Arbeitsstellung und der Transportstellung und umgekehrt dargestellt ist.

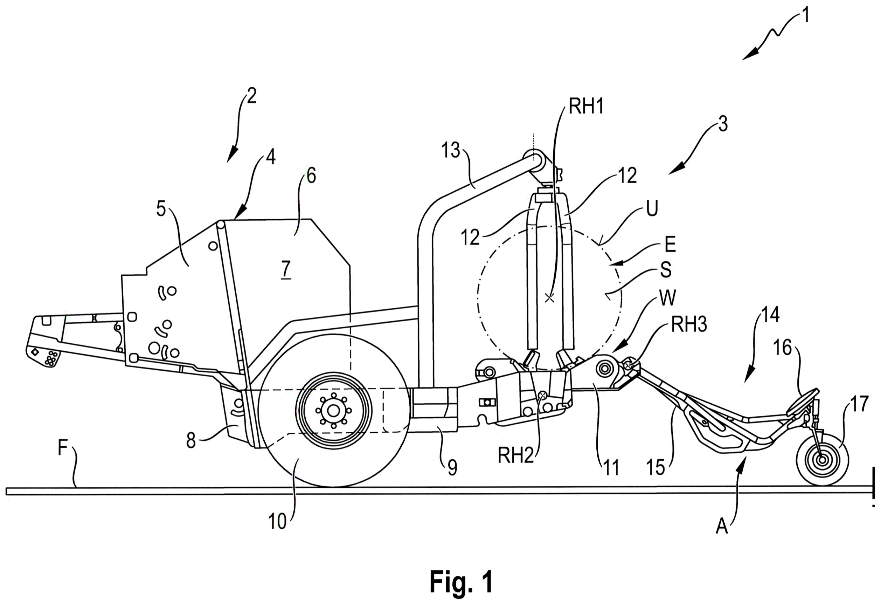

FIG. 1 zeigt eine schematische und exemplarische Darstellung einer erfindungsgemäßen landwirtschaftlichen Press-Wickelkombination 1. Die Press-Wickelkombination 1 umfasst eine landwirtschaftliche Rundballenpressen 2 und eine Wickeleinrichtung 3 zum Einwickeln von zylindrischen Erntegutballen E, die auch als Rundballen bezeichnet werden, mit einem Wickelmaterial. Eine Rundballenpresse 2 umfasst typischerweise ein Pressengehäuse 4, welches ein feststehendes Gehäuseteil 5 und eine relativ zu dem feststehenden Gehäuseteil 5 schwenkbare Auswurfklappe 6 umfasst. Die Auswurfklappe 6 ist zwischen einer Schließstellung und einer Öffnungsstellung relativ zum feststehenden Gehäuseteil 5 reversibel schwenkbar, wobei eine Bewegung der Auswurfklappe 6 zwischen der Schließstellung und der Öffnungsstellung zum Öffnen oder Schließen einer in dem Pressengehäuse 3 ausgebildeten Presskammer 7 führt. Das Pressengehäuse 4, insbesondere das feststehende Gehäuseteil 5, ist auf einem Fahrgestell 8 angeordnet und mit diesem verbunden, über das die Rundballenpresse 2 wiederum mit einer - in den FIGs. nicht dargestellten - landwirtschaftlichen Arbeitsmaschine, insbesondere einem Traktor, gekoppelt werden kann, so dass die landwirtschaftliche Arbeitsmaschine die Rundballenpresse 2 im Betrieb auf einer landwirtschaftlichen Fläche F bewegt.

Die in dem Pressengehäuse 4 ausgebildete Presskammer 7 wird von einem - in den FIGs. nicht dargestellten - Pressmittel umfangsseitig begrenzt. Das Pressmittel kann als Pressriemen ausgebildet sein oder aber von einer Vielzahl von voneinander beabstandet angeordneten Pressrollen gebildet werden. Während des Betriebs der Rundballenpressen 2 wird mithilfe von sogenannten - in den FIGs. nicht dargestellten - Mitteln zum Aufnehmen und Fördern von Erntegut Erntegut von der landwirtschaftlichen Fläche F aufgenommen und in die Presskammer 7 gefördert, wobei mittels des Pressmittels aus dem in die Presskammer 7 geförderten Erntegut ein zylindrischer Erntegutballen E geformt bzw. gebildet wird. Die Mittel zum Aufnehmen und Fördern von Erntegut umfassen zumindest eine sogenannte Pick-Up, mit deren Hilfe das Erntegut von der landwirtschaftlichen Fläche F aufgenommen wird, und einen Rotor, mit dessen Hilfe das aufgenommene Erntegut der Presskammer 7 zugeführt wird.

Die Rundballenpresse 2 umfasst weiterhin eine - in den FIGs. nicht dargestellte - Einrichtung zum Ummanteln des in der Presskammer gebildeten zylindrischen Erntegutballens E mit einem Hüllmaterial. Diese Einrichtung zum Ummanteln ist innerhalb des Pressengehäuses 4 angeordnet und dazu eingerichtet, den zylindrischen Erntegutballen E nach Abschluss des Pressvorgangs und vor einem Auswerfen des zylindrischen Erntegutballens E aus der Presskammer 7, welches durch ein Verlagern der Auswurfklappe 6 aus der Schließstellung in die Öffnungsstellung erfolgt, noch in der Presskammer 7 entweder mit einem Netz oder mit einem Film bzw. einer Folie als Hüllmaterial zu ummanteln.

Die erfindungsgemäße Wickeleinrichtung 3, welche wie eingangs geschildert mit einer Rundballenpresse 2 zur Press-Wickelkombination 1 kombiniert werden kann, umfasst einen Tragrahmen 9, welcher als lasttragende Struktur für verschiedene nachfolgend noch beschriebenen Vorrichtungen bzw. Komponenten der Wickeleinrichtung 3 fungiert. Bei einer Kombination der Wickeleinrichtung 3 mit einer Rundballenpresse 2 zur Press-Wickelkombination 1 dient der Tragrahmen 9 der Wickeleinrichtung 3 ferner, wie insbesondere in FIG. 1 dargestellt, der Aufnahme bzw. Lagerung der Rundballenpresse 2. Der Tragrahmen 9 ist mit zwei Rädern 10 zur Abstützung der Wickeleinrichtung 3 gegenüber einem Untergrund, beispielsweise der landwirtschaftlichen Fläche F, gekoppelt. Der Tragrahmen 9 kann auch mit mehr als zwei Rädern 10 zur Abstützung der Wickeleinrichtung 3 gegenüber dem Untergrund, beispielsweise mit vier Rädern 10 in Form einer sogenannten Tandembereifung, gekoppelt sein.

Die Wickeleinrichtung 3 umfasst neben dem Tragrahmen 9 einen Wickeltisch 11 zur Aufnahme eines zylindrischen Erntegutballens E und zur Abgabe des zylindrischen Erntegutballens E. Der Wickeltisch 11 ist mit dem Tragrahmen 9 gekoppelt. Der Wickeltisch 11 ist dazu vorgesehen und eingerichtet, einen von dem Wickeltisch 11 aufgenommenen zylindrischen Erntegutballen E um eine horizontal verlaufende Rotationsachse RH1 des zylindrischen Erntegutballens E drehbeweglich anzutreiben. Für diesen Antrieb umfasst die Wickeleinrichtung 3 eine - in den FIGs. nicht dargestellte - Antriebseinrichtung. Zum Antrieb des zylindrischen Erntegutballens E um die horizontal verlaufende Rotationsachse RH1 umfasst der Wickeltisch 11 beispielsweise, wie insbesondere im FIG. 3 dargestellt, zumindest zwei drehbar gelagerte Walzen 11.1, 11.2 sowie mehrere, um die Walzen 11.1, 11.2 herumgeschlungene, den zylindrischen Erntegutballen E unterstützenden Bänder 11.3. Indem zumindest eine der Walzen 11.1, 11.2 drehangetrieben wird, kann der zylindrischen Erntegutballen E um die horizontal verlaufende Rotationsachse RH1 in Drehung versetzt werden.

Der Wickeltisch 11 ist ferner um eine horizontal verlaufende Rotationsachse RH2, auch als Schwenkachse bezeichnet, schwenkbeweglich reversibel verstellbar an dem Tragrahmen 9 der Wickeleinrichtung 3 angeordnet, beispielsweise zwecks Aufnahme und Abgabe des zylindrischen Erntegutballens E. Durch Ansteuerung kann der Wickeltisch 11 um die horizontal verlaufende Rotationsachse RH2 verschwenkt werden. Für ein solches Verschwenken des Wickeltisches kann die Wickeleinrichtung 3 eine - in den FIGs. ebenfalls nicht dargestellte - Antriebseinrichtung umfassen, die entsprechend angesteuert wird. Zum Einwickeln bzw. Umhüllen des zylindrischen Erntegutballens E mit Wickelmaterial weist die Wickeleinrichtung 3 bevorzugt und wie in FIGs. dargestellt zwei Wickelarme 12 auf, welche an einem Tragrahmen 13 drehbar angeordnet sind. Die Wickelarme 12 sind U-förmig angeordnet und können Wickelmaterial, welches jeweils endseitig an den Wickelarmen 12 über Wickelmaterialrollen bevorratet ist, um den zylindrischen Erntegutballen E abwickeln, wobei mittels des Wickeltisches 11 gleichzeitig der zylindrische Erntegutballen E um die horizontal verlaufende Rotationsachse RH1 des zylindrischen Erntegutballens E in Drehbewegung versetzt werden kann, wodurch eine vollständige Umwickelung des zylindrischen Erntegutballens E mit Wickelmaterial gewährleistet werden kann. Andere Ausgestaltungen der Vorrichtung zur Applikation von Wickelmaterial abweichend von den genannten Wickelarmen 12 sind gleichermaßen vorstellbar.

Der zylindrische Erntegutballen E wird üblicherweise aus der Rundballenpresse 2, beispielsweise aus der Presskammer 7 oder von der Wickeleinrichtung 3, ausgeworfen und unmittelbar auf dem Untergrund oder einer Transportvorrichtung (nicht dargestellt) abgelegt. Der zylindrische Erntegutballen E wird dabei überwiegend mit seiner Umfangsfläche U auf dem Untergrund abgelegt. Möglich ist jedoch auch eine Ablage der zylindrischen Erntegutballen E auf einer der Stirnflächen S, was beispielsweise in hügeligem Gelände mit geneigtem Untergrund ein Wegrollen der abgelegten zylindrischen Erntegutballen E verhindern kann. Zudem kann eine Aufnahme der angelegten zylindrischen Erntegutballen E, je nach Greifwerkzeug, durch die stirnseitige Ablage erleichtert werden.

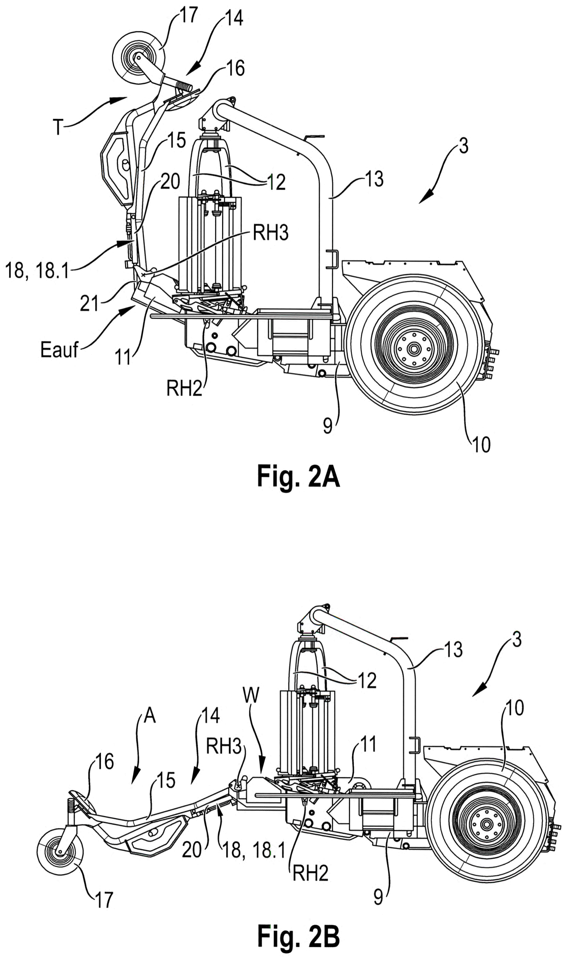

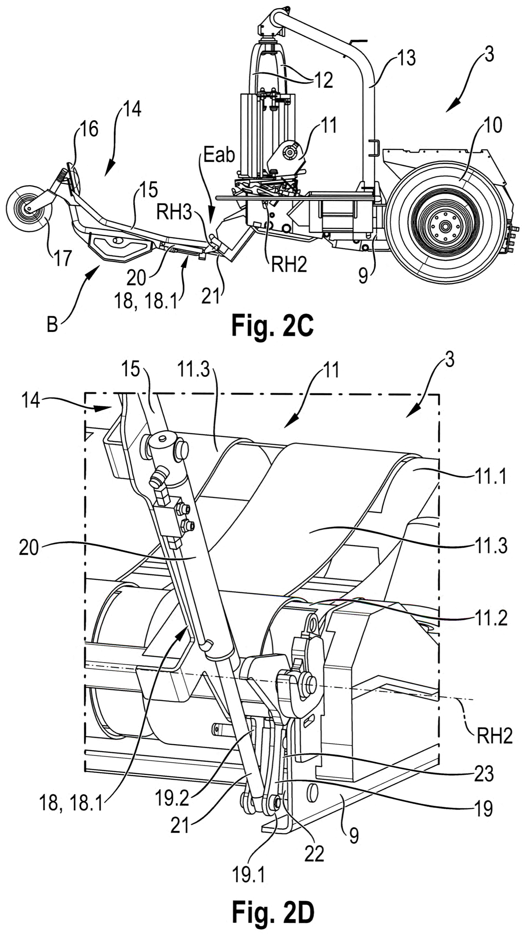

Die in den FIGs. 1 und 2A bis 2C dargestellte Wickeleinrichtung 3 umfasst erfindungsgemäß zum Ablegen der zylindrischen Erntegutballen E auf einer Stirnseite S eine der Wickeleinrichtung 3 nachgeordnete Ballenablagevorrichtung 14. Der zylindrische Erntegutballen E trifft bei der Abgabe über den Wickeltisch 11 auf die Ballenablagevorrichtung 14, welche einen an einem starren Gestell 15 angeordneten Abweiser 16 zum Ablegen des zylindrischen Erntegutballens E auf einer Stirnseite S umfasst bzw. ist in dieser Form ausgebildet. Das Gestell 15 ist dabei üblicherweise zu einer Seite der Wickeleinrichtung 3 hin versetzt angeordnet, so dass ein darauf auftreffender zylindrischer Erntegutballen E in eine Kippbewegung zu der nicht unterstützen Seite hinbewegt wird. Durch den Kontakt des zylindrischen Erntegutballens E mit dem Abweiser 16 wird dieser weiter gekippt, so dass dieser mit einer seiner Stirnflächen S auf dem Untergrund zum Liegen kommt. Die Ballenablagevorrichtung 14 ist um eine horizontal verlaufende Rotationsachse RH3 an dem Wickeltisch 11, insbesondere heckseitig, angeordnet. Die Rotationsachse RH3 verläuft dabei vorzugsweise parallel zu der horizontal verlaufende Rotationsachse RH2 des Wickeltisches 11. Über ein Stützrad 17 ist die Ballenablagevorrichtung 14 gegenüber dem Untergrund abstützbar. Über die schwenkbewegliche Anordnung der Ballenablagevorrichtung 14 am Wickeltisch 11 ist es möglich die Ballenablagevorrichtung 14 zwischen einer Transportstellung T, in welcher die Ballenablagevorrichtung 14 keinen Kontakt mit dem Untergrund hat und somit ein Transport möglich ist, und einer Arbeitsstellung A, in welcher sich die Ballenablagevorrichtung 14 auf dem Untergrund abstützt, zu verlagern bzw. zu verschwenken.

Wie eingangs geschildert erfolgt das Verschwenken der Ballenablagevorrichtung 14 aus der Transportstellung T in die Arbeitsstellung A und umgekehrt regelmäßig manuell durch einen Bediener. Um auf das Erfordernis einer manuellen Verschwenkung der Ballenablagevorrichtung 14 verzichten zu können, ist erfindungsgemäß nun vorgesehen, dass die Ballenablagevorrichtung 14 eine zum Verschwenken der Ballenablagevorrichtung 14 zwischen der Arbeitsstellung A und der Transportstellung T ansteuerbare Aktuierungseinrichtung 18 umfasst. Neben der Aktuierungseinrichtung 18 umfasst die Ballenablagevorrichtung 14 weiterhin ein Betätigungselement 19, welches mit der Aktuierungseinrichtung 18 gekoppelt ist und während eines Schwenkvorgangs der Ballenablagevorrichtung 14 aus der Arbeitsstellung A in die Transportstellung T und umgekehrt zeitweise mit dem Wickeltisch 11 zusammenwirkt. Durch Ansteuerung der Aktuierungseinrichtung 18 kann demnach die Ballenablagevorrichtung 14 aus der Arbeitsstellung A in die Transportstellung T und umgekehrt verbracht werden, ohne dass ein Bediener die Ballenablagevorrichtung 14 manuell verschwenken muss. Während dieses Verschwenkvorgangs über die Aktuierungseinrichtung 18 wirkt das mit der Aktuierungseinrichtung 18 gekoppelte Betätigungselement 19 zeitweise mit dem Wickeltisch 11 zusammen, stützt sich insbesondere an dem Wickeltisch 11 ab, und unterstützt hierdurch den Verschwenkvorgang der Ballenablagevorrichtung 14 aus der Arbeitsstellung A in die Transportstellung T und umgekehrt.

Die Aktuierungseinrichtung 18 ist dabei einenends schwenkbeweglich mit dem Gestell 15 der Ballenablagevorrichtung 14 und anderenends schwenkbeweglich mit dem Betätigungselement 19 verbunden. Das Betätigungselement 19 ist wiederum schwenkbeweglich mit dem Gestell 15 der Ballenablagevorrichtung 14 verbunden, sodass das Betätigungselement 19 als Koppelglied ausgebildet ist bzw. die Funktion eines Koppelglieds einnimmt. Das als Koppelglied ausgebildete Betätigungselement 19 ist bevorzugt und wie in FIG. 3 dargestellt als ein Hebel mit einer sichelförmigen Formgebung, also eine konvexe Umfangsfläche 19.1 und eine konkave Umfangsfläche 19.2 aufweisend, ausgebildet.

Die Aktuierungseinrichtung 18 ist bevorzugt als Verstellzylinder 18.1, besonders bevorzugt und wie insbesondere in FIG. 3 dargestellt als hydraulischer Verstellzylinder 18.1, ausgebildet. Eine Ausgestaltung der Aktuierungseinrichtung 18 als elektrischer Aktor ist jedoch gleichermaßen vorstellbar. Die als Verstellzylinder 18.1 ausgebildete Aktuierungseinrichtung 18 umfasst ein Zylindergehäuse 20 sowie eine aus dem Zylindergehäuse 20 ausfahrbare bzw. in das Zylindergehäuse 20 einfahrbare Zylinderstange 21. Das Zylindergehäuse 20 ist dabei mit dem Gestell 15 der Ballenablagevorrichtung 14 schwenkbeweglich und die Zylinderstange 21 mit dem als Koppelglied ausgebildeten Betätigungselement 19 schwenkbeglich verbunden. Der Anbindungspunkt des Zylindergehäuses 20 am Gestell 15 ist dabei entlang des Gestells 15 der Ballenablagevorrichtung 14 gesehen weiter von dem Anbindungspunkt der Ballenablagevorrichtung 14 an dem Wickeltisch 11 entfernt als der Anbindungspunkt des als Koppelglied ausgeführten Betätigungselements 19 am Gestell 15 der Ballenablagevorrichtung 14. Aufgrund dieser Ausgestaltung ist die Zylinderstange 21 des Verstellzylinders 18.1 in der Transportstellung T der Ballenablagevorrichtung 14 vollständig aus dem Zylindergehäuse 20 ausgefahren und in der Arbeitsstellung A der Ballenablagevorrichtung 14 vollständig im Zylindergehäuse 20 eingefahren.

Damit das Betätigungselement 19 der Ballenablagevorrichtung 14 mit dem Wickeltisch 11 zusammenwirken kann, umfasst der Wickeltisch 11 eine Anlagestruktur 22. Vorzugsweise ist die Anlagestruktur 22 wie in FIG. 3 dargestellt in Gestalt eines Anlagebolzens ausgeführt. Das Betätigungselement 19 der Ballenablagevorrichtung 14 liegt während des Verschwenkens der Ballenablagevorrichtung 14 aus der Arbeitsstellung A in die Transportstellung T und umgekehrt zeitweise an der Anlagestruktur 22 des Wickeltisches 11 an und stützt sich hierdurch an der Anlagestruktur 22 ab. Die Anlagestruktur 22 stellt demnach ein Hindernis bzw. Gegenlager in der Bewegungsbahn des Betätigungselements 19 dar, wodurch die Wirkung des Betätigungselements 19 auf das Gestell 15 der Ballenablagevorrichtung 14 bei einem Verschwenken des Betätigungselements 19 durch die Aktuierungseinrichtung 18 verändert wird. Wie auch der Wickeltisch 11 umfasst das Betätigungselement 19 eine Anlagestruktur 23, die mit der Anlagestruktur 22 des Wickeltisches 11 während des Verschwenkens der Ballenablagevorrichtung 14 durch die Aktuierungseinrichtung 18 zusammenwirkt. Bei der bevorzugten und in FIG. 3 dargestellten Ausgestaltung des Betätigungselements 19 als Hebel ist die Anlagestruktur 23 an der konvexen Umfangsfläche 19.1 des Hebels ausgebildet. Vorzugsweise ist die Anlagestruktur 23 in Gestalt einer Anlageplatte ausgeführt. Während des Schwenkvorgangs der Ballenablagevorrichtung 14 aus der Arbeitsstellung A in die Transportstellung T und umgekehrt liegt die Anlageplatte demnach an dem Anlagebolzen des Wickeltisches 11 an.

Wie bereits beschrieben ist der Wickeltisch 11 um die horizontal verlaufende Rotationsachse RH2 schwenkbeweglich gelagert. Aufgrund dieser schwenkbeweglichen Anordnung des Wickeltisches 11 am Tragrahmen 9 ist es möglich, den Wickeltisch 11 zwischen einer Erntegutballenaufnahmestellung Eauf und einer Wickelstellung W ansteuerbar zu verschwenken. Aufgrund der Kopplung von Wickeltisch 11 und Ballenablagevorrichtung 14 kann durch das Verschwenken des Wickeltisches 11 auch der Verstellprozess der Ballenablagevorrichtung 14 zwischen Transportstellung T und Arbeitsstellung A beeinflusst werden. Die Beeinflussung erfolgt dabei in der Form, dass das Verschwenken der Ballenablagevorrichtung 14 aus der Arbeitsstellung A in die Transportstellung T und umgekehrt durch ein Verstellen des Wickeltisches 11 zwischen der Wickelstellung W und der Erntegutballenaufnahmestellung Eauf und umgekehrt unterstützt wird. Der Wickeltisch 11 ist dabei in der Arbeitsstellung A der Ballenablagevorrichtung 14 in der Wickelstellung W und in der Transportstellung T der Ballenablagevorrichtung 14 in der Erntegutballenaufnahmestellung Eauf positioniert.

Neben der Verschwenkbarkeit der Ballenablagevorrichtung 14 aus der Transportstellung T in die Arbeitsstellung A ist die Ballenablagevorrichtung 14 ferner derart an dem Wickeltisch 11 schwenkbeweglich gelagert, dass dieser aus der Arbeitsstellung A in eine Erntegutballenablagestellung B reversibel verschwenkbar ist. Um die Verschwenkung der Ballenablagevorrichtung 14 aus der Arbeitsstellung A in die Erntegutballenablagestellung B zu ermöglichen, kann der Wickeltisch 11 um die horizontale Rotationsachse RH2 aus der Wickelstellung W in eine Erntegutballenabgabestellung Eab ansteuerbar verschwenkt werden. Hierzu wird der Wickeltisch 11 aus der Wickelstellung W in die Erntegutballenabgabestellung Eab verschwenkt, wobei sich aufgrund der Kopplung von Ballenablagevorrichtung 14 und Wickeltisch 11 die Ballenablagevorrichtung 14 in die Erntegutballenablagestellung B verlagert. Der Wickeltisch 11 nimmt somit in der Erntegutballenablagestellung B der Ballenablagevorrichtung 14 seine Erntegutballenabgabestellung Eab ein.

Zur Überwachung der Verstellung der Ballenablagevorrichtung 14 aus der Transportstellung T in die Arbeitsstellung A umfasst die Ballenablagevorrichtung 14 eine - in den FIGs. nicht dargestellte - Sensoreinrichtung. Diese Sensoreinrichtung ist bevorzugt als Drehwinkelsensor ausgestaltet, welche anhand der Winkelstellung der Ballenablagevorrichtung 14 die Lage der Ballenablagevorrichtung 14 erfassen und hieraus bestimmen kann, dass die Ballenablagevorrichtung 14 in der Transportstellung T oder der Arbeitsstellung A positioniert ist.

Die Wickeleinrichtung 3 selbst, aber auch die mit der Wickeleinrichtung 3 gekoppelte landwirtschaftliche Rundballenpresse 2 oder die landwirtschaftliche Arbeitsmaschine, insbesondere der Traktor, welcher mit der Press-Wickelkombination 1 gekoppelt ist, können eine oder mehrere - in den FIGs. nicht dargestellte - Steuereinrichtungen umfassen, die zur Ansteuerung und/oder Einstellung der Aktuierungseinrichtung 18 und/oder des Wickeltisches 11 mit diesen mittelbar oder unmittelbar in datenübertragender Art und Weise gekoppelt sind. Eine mittelbare Kopplung kann beispielsweise dann vorliegen, wenn die Steuereinrichtung(en) mit den vorstehend genannten - in den FIGs. nicht dargestellten - Antriebseinrichtungen gekoppelt ist. Diese Antriebseinrichtungen können wahlweise, sofern sie nicht eine spezielle festgelegte Ausgestaltung aufweisen, hydraulische oder elektrische Antriebselemente, beispielsweise Hydromotoren oder Elektromotoren, umfassen. Die Ansteuerung und/oder Einstellung der genannten Einrichtungen durch die Steuereinrichtung(en) kann dabei automatisch und/oder über Eingaben des Bedieners auf einem Terminal ausgelöst und durchgeführt werden. Das Terminal kann dabei Bestandteil eines Assistenzsystem sein, welches Bestandteil der Wickeleinrichtung 3, der Rundballenpresse 2 und/oder eines externen Geräts, beispielsweise eines Smartphones, Tablets oder dergleichen, sein kann. Ferner kann bzw. können die Steuereinrichtung(en) auch mit der Sensoreinrichtung in datenübertragender Art und Weise gekoppelt sein, um eine Information zur Stellung der Ballenablagevorrichtung 14 zu erhalten, welche bei Steuerung und/oder Einstellung der verschiedenen Einrichtungen durch die Steuereinrichtung(en) Verwendung finden kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Press-Wickelkombination | 19.1 | Konvexe Umfangsfläche |
| | | 19.2 | Konkave Umfangsfläche |
| 2 | Landwirtschaftliche Rundballenpresse | 20 | Zylindergehäuse |
| | | 21 | Zylinderstange |
| 3 | Wickeleinrichtung | 22 | Anlagestruktur |
| 4 | Pressengehäuse | 23 | Anlagestruktur |
| 5 | Feststehendes Gehäuseteil | | |
| 6 | Auswurfklappe | | |
| 7 | Presskammer | E | Erntegutballen |
| 8 | Fahrgestell | U | Umfangsfläche |
| 9 | Tragrahmen | S | Stirnseite |
| 10 | Rad | F | Landwirtschaftliche Fläche |
| 11 | Wickeltisch | RH1 | Horizontal verlaufende Rotationsachse |
| 11.1 | Walze | | |
| 11.2 | Walze | RH2 | Horizontal verlaufende Rotationsachse |
| 11.3 | Band | | |
| 12 | Wickelarm | RH3 | Horizontal verlaufende Rotationsachse |
| 13 | Tragrahmen | | |
| 14 | Ballenablagevorrichtung | T | Transportstellung |
| 15 | Gestell | A | Arbeitsstellung |
| 16 | Abweiser | B | Erntegutballenablagestellung |
| 17 | Stützrad | Eauf | Erntegutballenaufnahmestellung |
| 18 | Aktuierungseinrichtung | W | Wickelstellung |
| 18.1 | Verstellzylinder | Eab | Erntegutballenabgabestellung |
| 19 | Betätigungselement | | |

## Patentansprüche

1. Wickeleinrichtung (3) zum Einwickeln von zylindrischen Erntegutballen (E) mit einem Wickelmaterial, insbesondere für eine landwirtschaftliche Press-Wickelkombination (2), wobei die Wickeleinrichtung (3) einen Tragrahmen (9) umfasst, der mit einem Wickeltisch (11) zur Aufnahme und zur Abgabe des zylindrischen Erntegutballens (E) gekoppelt ist, wobei die Wickeleinrichtung (3) eine Ballenablagevorrichtung (14) umfasst, welche an dem Wickeltisch (11) um eine horizontal verlaufende Rotationsachse (RH3) zwischen einer Arbeitsstellung (A), in welcher sich die Ballenablagevorrichtung (14) auf einem Untergrund abstützt, und einer Transportstellung (T), in welcher die Ballenablagevorrichtung (14) keinen Kontakt zum Untergrund hat, reversibel verschwenkbar angeordnet ist,
**dadurch gekennzeichnet, dass**
die Ballenablagevorrichtung (14) eine zum Verschwenken der Ballenablagevorrichtung (14) zwischen der Arbeitsstellung (A) und der Transportstellung (T) ansteuerbare Aktuierungseinrichtung (18) umfasst, wobei die Ballenablagevorrichtung (14) ein Betätigungselement (19) umfasst, welches mit der Aktuierungseinrichtung (18) gekoppelt ist und dazu vorgesehen und eingerichtet ist, während eines Schwenkvorgangs der Ballenablagevorrichtung (14) aus der Arbeitsstellung (A) in die Transportstellung (T) und umgekehrt zeitweise mit dem Wickeltisch (11) zusammenzuwirken.

2. Wickeleinrichtung (3) nach Anspruch 1, **dadurch gekennzeichnet, dass** die Ballenablagevorrichtung (14) in Form eines Gestells (15) mit einem daran angeordneten Abweiser (16) zum Ablegen des zylindrischen Erntegutballens (E) auf einer Stirnseite (S) ausgebildet ist, wobei die Aktuierungseinrichtung (18) einenends schwenkbeweglich mit dem Gestell (15) der Ballenablagevorrichtung (14) und anderenends schwenkbeweglich mit dem Betätigungselement (19) verbunden ist, wobei das Betätigungselement (19) als Koppelglied ausgebildet ist und mit dem Gestell (15) der Ballenablagevorrichtung (14) schwenkbeweglich verbunden ist.

3. Wickeleinrichtung (3) nach Anspruch 2, **dadurch gekennzeichnet, dass** die Aktuierungseinrichtung (18) als Verstellzylinder (18.1), vorzugsweise hydraulischer Verstellzylinder (18.1), ausgebildet ist, wobei der Verstellzylinder (18.1) ein Zylindergehäuse (20) und eine aus dem Zylindergehäuse (20) ausfahrbare bzw. in das Zylindergehäuse (20) einfahrbare Zylinderstange (21) umfasst, wobei das Zylindergehäuse (20) mit dem Gestell (15) der Ballenablagevorrichtung (14) schwenkbeweglich verbunden ist und die Zylinderstange (21) mit dem als Koppelglied ausgebildeten Betätigungselement (19) schwenkbeglich verbunden ist.

4. Wickeleinrichtung (3) nach Anspruch 3, **dadurch gekennzeichnet, dass** die Zylinderstange (21) des Verstellzylinders (18.1) in der Transportstellung (T) der Ballenablagevorrichtung (14) vollständig aus dem Zylindergehäuse (20) ausgefahren und in der Arbeitsstellung (A) der Ballenablagevorrichtung (14) vollständig im Zylindergehäuse (20) eingefahren ist.

5. Wickeleinrichtung (3) nach einem der Ansprüche 1 bis 4, **dadurch gekennzeichnet, dass** der Wickeltisch (11) eine Anlagestruktur (22), vorzugsweise in Gestalt eines Anlagebolzens, umfasst, wobei das Betätigungselement (19) während des Verschwenkens der Ballenablagevorrichtung (14) aus der Arbeitsstellung (A) in die Transportstellung (T) und umgekehrt zeitweise an der Anlagestruktur (22) des Wickeltisches (11) anliegt.

6. Wickeleinrichtung (3) nach Anspruch 5, **dadurch gekennzeichnet, dass** das Betätigungselement (19) als ein Hebel mit einer sichelförmigen Formgebung ausgebildet ist, wobei an einer konvexen Umfangsfläche (19.1) des Hebels eine Anlagestruktur (23), vorzugsweise in Gestalt einer Anlageplatte, ausgebildet ist, wobei der Hebel während des Schwenkvorgangs der Ballenablagevorrichtung (14) aus der Arbeitsstellung (A) in die Transportstellung (T) und umgekehrt zeitweise mit seiner Anlagestruktur (23) an der Anlagestruktur (22) des Wickeltisches (11) anliegt.

7. Wickeleinrichtung (3) nach einem der Ansprüche 1 bis 6, **dadurch gekennzeichnet, dass** die Ballenablagevorrichtung (14) eine Sensoreinrichtung, vorzugsweise einen Drehwinkelsensor, umfasst, welche dazu vorgesehen und eingerichtet ist, eine Lage der Ballenablagevorrichtung (14) zu erfassen, anhand welcher bestimmbar ist, dass die Ballenablagevorrichtung (14) in der Transportstellung (T) oder der Arbeitsstellung (A) positioniert ist.

8. Wickeleinrichtung (3) nach einem der Ansprüche 1 bis 7, **dadurch gekennzeichnet, dass** der Wickeltisch (11) um eine horizontal verlaufende Rotationsachse (RH2) schwenkbeweglich zumindest zwischen einer Erntegutballenaufnahmestellung (Eauf) und einer Wickelstellung (W) ansteuerbar reversibel verstellbar am Tragrahmen (9) der Wickeleinrichtung (11) angeordnet ist, wobei die Wickeleinrichtung (3) dazu vorgesehen und eingerichtet ist, das Verschwenken der Ballenablagevorrichtung (14) aus der Arbeitsstellung (A) in die Transportstellung (T) und umgekehrt durch ein Verstellen des Wickeltisches (11) zwischen der Wickelstellung (W) und der Erntegutballenaufnahmestellung (Eauf) und umgekehrt zu unterstützen.

9. Wickeleinrichtung (3) nach Anspruch 8, **dadurch gekennzeichnet, dass** der Wickeltisch (11) in der Arbeitsstellung (A) der Ballenablagevorrichtung (14) in der Wickelstellung (W) und in der Transportstellung (T) der Ballenablagevorrichtung (14) in der Erntegutballenaufnahmestellung (Eauf) positioniert ist.

10. Wickeleinrichtung (3) nach Anspruch 8 oder 9, **dadurch gekennzeichnet, dass** die Ballenablagevorrichtung (14) an dem Wickeltisch (11) um die horizontal verlaufende Rotationsachse (RH3) aus der Arbeitsstellung (A) in eine Erntegutballenablagestellung (B) reversibel verschwenkbar angeordnet ist, wobei der Wickeltisch (11) um die horizontale Rotationsachse (RH2) schwenkbeweglich aus der Wickelstellung (W) in eine Erntegutballenabgabestellung (Eab) ansteuerbar reversibel verstellbar am Tragrahmen (9) der Wickeleinrichtung (11) angeordnet ist, wobei die Wickeleinrichtung (3) dazu vorgesehen und eingerichtet ist, die Ballenablagevorrichtung (14) aus der Arbeitsstellung (A) in die Erntegutballenablagestellung (B) und umgekehrt durch ein Verstellen des Wickeltisches (11) zwischen der Wickelstellung (W) und der Erntegutballenabgabestellung (Eab) und umgekehrt zu verbringen, wobei der Wickeltisch (11) in der Erntegutballenablagestellung (B) der Ballenablagevorrichtung (14) in der Erntegutballenabgabestellung (Eab) positioniert ist.

11. Landwirtschaftliche Press-Wickelkombination (1) umfassend eine landwirtschaftliche Rundballenpresse (2) und eine Wickeleinrichtung (3) zum Einwickeln von zylindrischen Erntegutballen (E) mit einem Wickelmaterial **dadurch gekennzeichnet, dass** die Wickeleinrichtung (3) nach einem der Ansprüche 1 bis 10 ausgebildet ist.
